# EUROPÄISCHE PATENTSCHRIFT

(11) **EP 2 366 575 B1**
(45) Veröffentlichungstag und Bekanntmachung des Hinweises auf die Patenterteilung: **26.10.2016**
(21) Anmeldenummer: 11157774.8
(22) Anmeldetag: 10.03.2011
(51) Int. Cl.: B60J 10/84, B60J 10/40, B60J 10/86, B60J 10/22

(54) **Dichtungsvorrichtung für eine Fahrzeugtür, insbesondere von Nutzfahrzeugen**
Seal device for a vehicle door, in particular of commercial vehicles
Dispositif d'étanchéification pour une porte de véhicule, notamment de véhicules utilitaires

(30) Priorität: 18.03.2010 DE 202010003795 U
(43) Veröffentlichungstag der Anmeldung: 21.09.2011
(73) Patentinhaber: Gummi-Welz GmbH u. Co. KG Gummi-Kunststofftechnik-Schaumstoffe, 89231 Neu-Ulm (DE)
(72) Erfinder: Fritsche, Wolfgang, 89134, Blaustein (DE); Lindenthal, Gunther, 89176, Asselfingen (DE); Grein, Horst, 34637, Schrecksbach (DE)
(74) Vertreter: König, Beate

(56) Entgegenhaltungen:
- DE-U1-202007 008 489
- DE-U1-202008 002 914
- GB-A- 725 108

## Beschreibung

Die Erfindung betrifft eine Dichtungsvorrichtung für eine Fahrzeugtür, insbesondere von Nutzfahrzeugen und insbesondere mit Hubverriegelung, wobei eine Stirnseite der Fahrzeugtür einem Türportal gegenüberliegt.

Nutzfahrzeuge, insbesondere Reisebusse, fahren nach Möglichkeit auf Autobahnen und anderen Schnellverkehrsstraßen mit relativ hohen Geschwindigkeiten. Daher ist es wichtig, die mit zunehmender Fahrgeschwindigkeit stärker werdenden Windgeräusche zu reduzieren.

Bislang sind im Abdichtungsbereich zwischen Fahrzeugtür und Türportal Maßnahmen zur Abdichtung des Längsspalts getroffen worden. So ist beispielsweise in der DE 20 2008 002 914 U1 beschrieben, innerhalb des Spaltes zwischen Portal und Fahrzeugtür ein elastisches Dichtungselement und ein Gegenlager vorzusehen. Das elastische Dichtungselement ist bei geschlossener Fahrzeugtür zusammengedrückt.

Der Erfindung liegt die Aufgabe zugrunde, eine Abdichtung der Öffnung zwischen Fahrzeugtür und Türportal zu schaffen, die sich für Türen mit Hubverriegelung eignet und mit der Windgeräusche weiter verringert werden können.

Diese Aufgabe ist durch die Erfindung bei einer Dichtungsvorrichtung mit den Merkmalen des Anspruchs 1 gelöst. Vorteilhafte Weiterbildungen der erfindungsgemäßen Dichtungsvorrichtung sind Gegenstand der Unteransprüche.

Eine Dichtungsvorrichtung für eine Tür, insbesondere von Nutzfahrzeugen, gemäß der Erfindung ist insbesondere für Türen mit Hubverriegelung vorgesehen. Eine Stirnseite der Tür liegt einem Türportal gegenüber. Die Stirnseite der Tür und/oder das Türportal ist im unteren Bereich der Türseite mit einem zumindest teilweise massiv ausgeführten Dichtungsabschnitt versehen, dessen Außenkontur in Längsrichtung der Stirnseite der Tür variiert derart, dass bei Türschließstellung ein Formschluss zwischen dem Dichtungsabschnitt und dem Türportal oder der Portaldichtung oder dem am Türportal vorgesehenen Dichtungsabschnitt gebildet ist.

Es ist somit bei einer Ausführung der erfindungsgemäßen Dichtungsvorrichtung am unteren Ende der Türstirnseite ein Dichtungsabschnitt vorgesehen, dessen Gestalt bzw. Querschnitt sich nach oben ändert. Dieser Dichtungsabschnitt ist dabei so ausgeführt, dass seine Kontur komplementär zu derjenigen des Türportals ist. Schließt die Tür, dann gelangen der Dichtungsabschnitt und das Türportal in Eingriff und durch die komplementäre Form ergibt sich eine enge Verbindung und eine außerordentlich effektive Abdichtung. Eine große Auswirkung hat der stirnseitige untere Abschluss des Spalts zwischen Türstirnseite und Türportal. Dieser schließt das Eindringen von Außenluft in den Türspalt aus. Windgeräusche können so minimiert werden.

Das Türportal kann auch mit einer Portaldichtung versehen sein. Die Kontur des Dichtungsabschnitts ist dann an die Gestalt der Portaldichtung angepasst.

Bei einer anderen Ausführung der erfindungsgemäßen Dichtungsvorrichtung ist das Türportal unten mit dem oben beschriebenen Dichtungsabschnitt versehen und dieser ist von der Gestalt her passend zu der Kontur der Türstirnseite. Im übrigen ist die Funktion dieselbe.

Es können auch die Türstirnseite und das Türportal unten jeweils mit Dichtungsabschnitten wie beschrieben versehen sein. Die Dichtungsabschnitte sind dann mit einer komplementären Gestalt ausgebildet.

Vorteilhaft hat der an der Stirnseite der Tür vorgesehene Dichtungsabschnitt eine sich in Stirnseitenlängsrichtung verjüngende oder erweiternde Gestalt, insbesondere Keilform. Das Portal oder die Portaldichtung oder der am Türportal vorgesehene Dichtungsabschnitt hat eine komplementär sich erweiternde oder verjüngende Gestalt, insbesondere Keilform. Beim Schließvorgang legen sich die gegenüberliegenden Flächen eng auf einander. Handelt es sich um eine Tür mit Hubverriegelung, dann gleiten die korrespondierenden Flächen zuvor aneinander entlang und werden dann zusammengedrückt.

Es kann auch der am Türportal vorgesehene Dichtungsabschnitt eine sich in Stirnseitenlängsrichtung verjüngende oder erweiternde Gestalt, insbesondere Keilform, haben. Wiederum hat die Stirnseite der Tür oder der an der Türstirnseite vorgesehene Dichtungsabschnitt eine komplementär sich erweiternde oder verjüngende Gestalt, insbesondere Keilform.

Bei einem Ausführungsbeispiel der Erfindung varriert die Dicke des zumindest einen Dichtungsabschnitts in Querrichtung der Türstirnseite bzw. des Türportals. Hierdurch wird der Dichtungseingriff verstärkt.

Die erfindungsgemäße Dichtungsvorrichtung eignet sich besonders für Türen, insbesondere Außenschwenktüren und Schwenkschiebetüren, die mit einer Bewegung öffnen und schließen, die im letzten Stadium der Schließbewegung kreis- oder parabelförmig verläuft. Ebenso können Türen mit und ohne Hubverriegelung mit ihr ausgestattet werden. Die Türen bzw. Türportale können mit ihr auch nachgerüstet werden.

Üblicherweise sind die Fahrzeugtüren mit einem horizontalen Schwellerdichtungsprofil mit mindestens einer horizontal verlaufenden Abdichtungslippe zu einem Türschweller oder einem anderen dem Bereich der unteren Türseite gegenüberliegenden Karosseriebauteil ausgestattet. Bei einer Ausführung der Erfindung ist der an der Stirnseite der Tür vorgesehene Dichtungsabschnitt mit dem Schwellerdichtungsprofil einstückig ausgeführt. Er kann an dem Schwellerdichtungsprofil angeklebt, angespritzt oder anvulkanisiert sein. Die Montage ist auf diese Weise einfach.

Der an der Stirnseite der Tür vorgesehene Dichtungsabschnitten ist mit mindestens einer Dichtlippe versehen. Hierdurch lässt sich die Dichtwirkung verbessern.

Zweckmäßig sind die Türen von Nutzfahrzeugen, insbesondere Omnibussen, an der Stirnseite der Tür mit einem Schließkantenprofil versehen. Bei einer Ausführung der Erfindung ist der an der Türstirnseite vorgesehene Dichtungsabschnitt mit dem Schließkantenprofil einstückig, z.B. sind sie durch Vulkanisation verbunden worden.

Eine Anzahl von als Fingerschutzleiste ausgebildeten Schließkantenprofilen weist mindestens eine Hohlkammer auf, deren Druck beispielsweise über einen Druckwellenschalter überwacht wird. Im Fall eines Einklemmereignisses wird ein Türöffnungssignal ausgegeben. Bei einer Ausführung der erfindungsgemäßen Dichtungsvorrichtung ist zur Verbindung mit dem zum Druckwellenschalter führenden Druckwellenschlauch von der mindestens einen Druckwellen- oder Hohlkammer ein Verbindungskanal durch den Dichtungsabschnitt ausgebildet. Diese integrierte Ausgestaltung erspart zusätzlichen Raum für eine sonst benötigte Schlauchverbindung zwischen der Hohlkammer und dem Raum hinter dem Schwellerdichtungsprofil, der üblicherweise den zum Druckwellenschalter führenden Druckwellenschlauch aufnimmt. Desgleichen entsteht auch durch den erfindungsgemäßen Dichtungsabschnitt kein zusätzlicher Montagebedarf.

Bei einer vorteilhaften Ausführung der erfindungsgemäßen Dichtungsvorrichtung ist ein Metallrohr aus z.B. Edelstahl als Verbindungskanal im Dichtungsabschnitt eingearbeitet. Es ist entsprechend dem Kanalverlauf gebogen und wird zweckmäßig einvulkanisiert. Das Metallrohr wird vorzugsweise so angeordnet, dass es aus der der Türstirnseite zugewandten Seite des Verbindungskanals vorsteht und dort von einem an den Dichtungsabschnitt angeformten, vorzugsweise kegelstumpfförmigen Ansatz umgeben ist. Der Ansatz sichert die Lage des Dichtungsabschnitts und dichtet außerdem die Durchführungsöffnung im Türprofil, d.h. dessen Stirnseite, ab. Ist kein Metallrohr vorgesehen, stellt der vorzugsweise kegelstumpfförmige Ansatz die Verbindung zwischen Türprofil und Dichtungsabschnitt dar.

Die Erfindung wird im folgenden weiter anhand eines Ausführungsbeispiels und der Zeichnung beschrieben. Diese Darstellung dient lediglich zu Veranschaulichungszwecken und soll die Erfindung nicht auf die konkret angegebenen Merkmalskombinationen einschränken. Es zeigen
- Fig. 1: eine Schnittansicht eines einstückig mit einem Schwellerdichtungsprofil und einem Schließkantenprofil einer Fahrzeugtür an deren unterem Ende ausgebildeten Dichtungsabschnitts einer Dichtungsvorrichtung gemäß der Erfindung,
- Fig. 2: eine weitere Schnittansicht des Dichtungsabschnitts von Fig. 1, die eine erste Hohlkammer des Schließkantenprofils und einen von der Hohlkammer aus durch den Dichtungsabschnitt verlaufenden ersten Verbindungskanal zeigt,
- Fig. 3: eine weitere, in einer anderen Höhe ausgeführte Schnittansicht ähnlich Fig. 2, die eine zweite Hohlkammer des Schließkantenprofils und einen von der Hohlkammer aus durch den Dichtungsabschnitt verlaufenden zweiten Verbindungskanal zeigt,
- Fig. 4: eine Ansicht einer der erfindungsgemäßen Dichtungsvorrichtung gegenüberliegenden Portaldichtung von unten,
- Fig. 5: eine Längsschnittansicht der Portaldichtung von Fig. 4, ausgeführt längs Linie B-B in Fig. 6 und
- Fig. 6: eine Draufsicht des unteren Bereichs der Portaldichtung von Fig. 4.

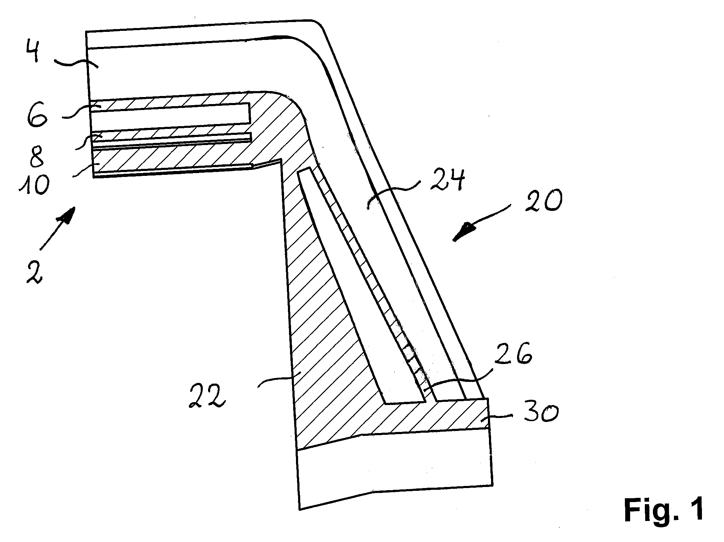

Im Folgenden wird die erfindungsgemäße Dichtungsvorrichtung anhand von Fig. 1 bis 3 beschrieben. Unten rechts dargestellt ist ein zur Stirnseite einer Fahrzeugtür hin endendes, unten an einer nicht dargestellten Fahrzeugtür horizontal verlaufendes Schwellerdichtungsprofil 2. Dieses ist mit zwei Abdichtungslippen 4, 6 versehen. Die Abdichtungslippe 6 weist an der Rückseite eine Feder 8 auf. Die Abdichtungslippe 4 geht in einen mit der Abdichtungslippe 6 verbundenen flexiblen Haltesteg 10 über. Darüber erstreckt sich eine weitere Abdichtungslippe 12 zur zusätzlichen Abdichtung am Einstieg.

Das Schwellerdichtungsprofil 2 geht in einen den unteren Bereich der Türstirnseite überdeckenden Dichtungsabschnitt 20 über. Der Dichtungsabschnitt 20 hat in der Höhe der Schnittansicht von Fig. 1 einen massiv ausgeführten Abschnitt 22 mit keilförmigem Querschnitt, wobei die Dicke von der Türinnenseite zur Türaußenseite hin zunimmt. Außerdem weist der Dichtungsabschnitt 20 Abdichtungslippen 24, 26 auf, die die Fortsetzung der Abdichtungslippen 4, 6 sind und am anderen Ende in einen Dichtungsstreifen 30 münden oder auf die Außenwand des Türprofils stoßen.

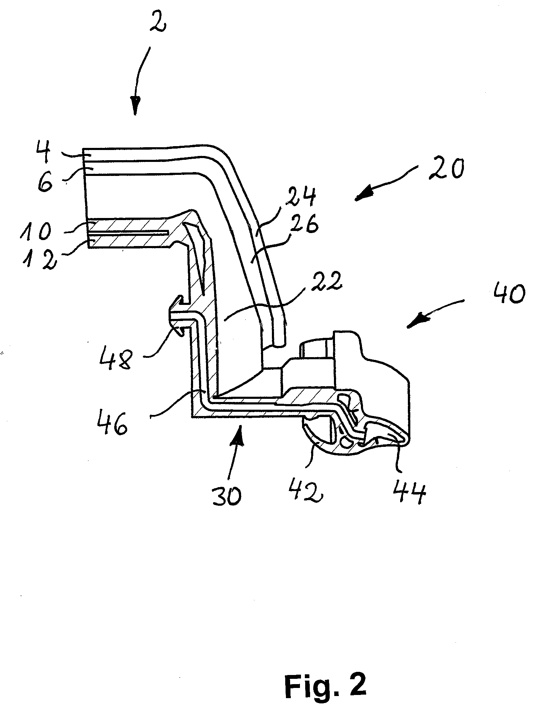

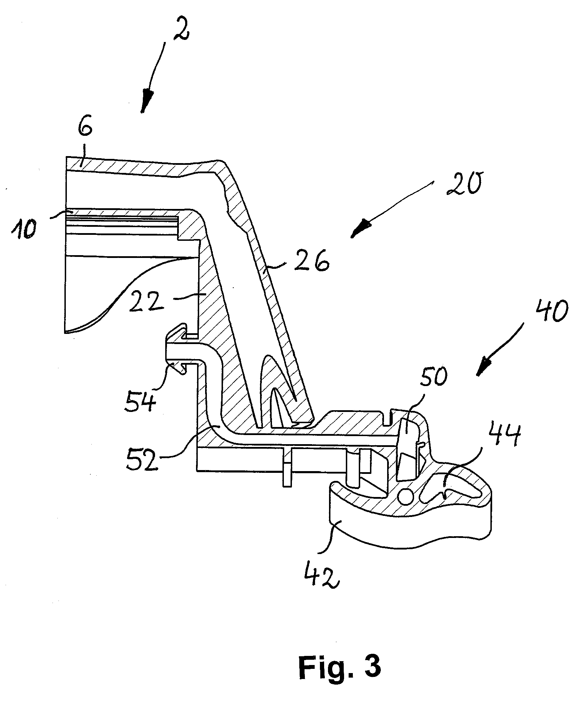

Der Dichtungsstreifen 30 geht in ein Schließkantenprofil 40 über, das in Fig. 2 und 3 mehr im Einzelnen dargestellt ist. Es weist auf der Außenseite eine Abdecklippe 42 auf. Dieser entgegengesetzt angeordnet befindet sich ein flexibler Bereich mit einer ersten Hohlkammer 44, die als Druckwellenkammer dient. Von der ersten Hohlkammer aus führt ein Verbindungskanal 46 durch den Dichtungsstreifen 30 und den Abschnitt 22 bis zu dessen der Türstirnseite zugewandten Rückseite. An dieser ist ein kegelstumpfförmiger Ansatz 48 angeformt. Von einer zweiten Hohlkammer 50 aus, die als Druckwellenkammer dient, führt ein Verbindungskanal 52 durch den Dichtungsstreifen 30 und den Abschnitt 22 bis zu dessen der Türstirnseite zugewandten Rückseite. An dieser ist ebenfalls ein kegelstumpfförmiger Ansatz 54 angeformt. Der Ansatz 54 liegt bei diesem Ausführungsbeispiel unterhalb des Ansatzes 48.

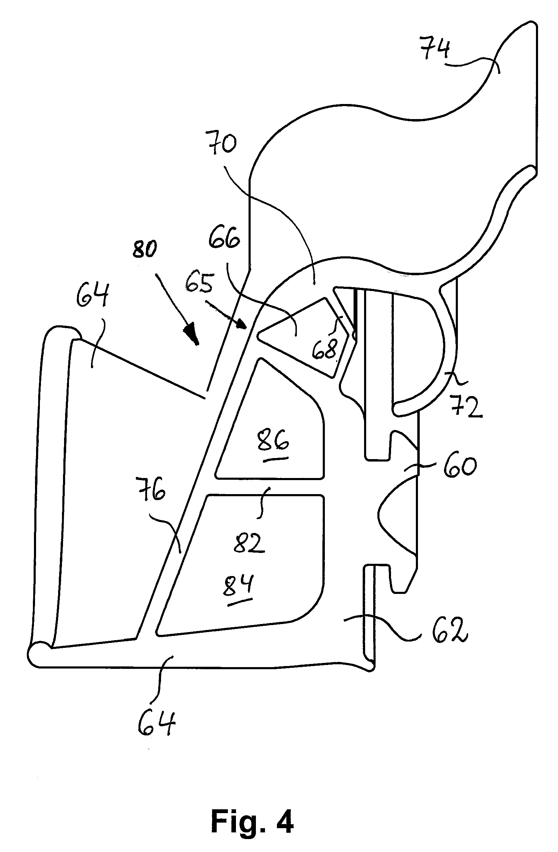

Fig. 4 bis 6 zeigen die der beschriebenen Dichtungsvorrichtung gegenüberliegende Portaldichtung, die ebenfalls einen unteren zusätzlichen Dichtungsabschnitt 80 gemäß der Erfindung aufweist. Die Portaldichtung hat einen Fuß 60 zur Befestigung am nicht gezeigten Portal und eine Fußplatte 62, von der auf der dem Fahrzeuginneren zugewandten Seite eine flexible Dichtleiste 64 absteht. Auf der Außenseite ist die Portaldichtung gegenüber der flexiblen Dichtleiste 64 mit einer durch einen Hohlraum 66 gebildeten flexiblen Rippe 65 abgeschlossen, wodurch ein durch die Dichtleiste 64 und die flexible Rippe 65 begrenzter Kanal 67 gebildet ist. Die flexible Rippe 65 ist in der Ansicht von Fig. 4 als solche jedoch nicht erkennbar und ihre Lage ist durch das Bezugszeichen angedeutet. Ein dünner geschlitzter Wandabschnitt 68 spreizt die Außenwände der Rippe 65 durch Federwirkung nach außen. Die Außenwand 70 der Rippe ist in Portalrichtung verlängert und geht am Ende in zwei entgegengesetzt abgespreizte Abdichtungslippen 72, 74 über.

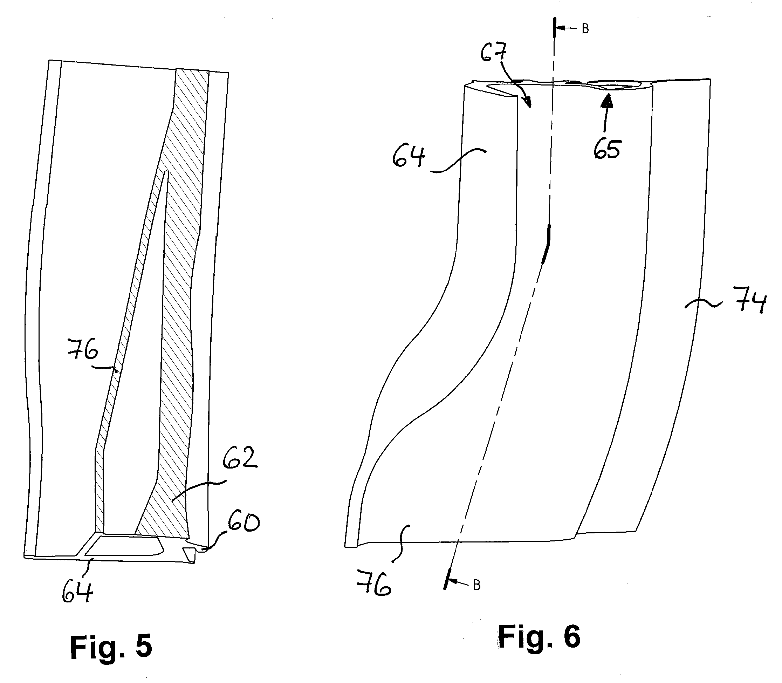

Der Dichtungsabschnitt 80 erstreckt sich in Querrichtung der Portaldichtung vom Fuß der flexiblen Dichtleiste 64 bis zu der Rippe 65 und nimmt Raum im Kanal 67 ein. Bei der im gezeigten Ausführungsbeispiel gegebenen Türkonfiguration verjüngt sich der Dichtungsabschnitt 80 in Querrichtung von der Dichtleiste 64 in Richtung der Rippe 65 und in Längsrichtung vom unteren Ende des Türportals bzw. der Portaldichtung bis etwa zu der Stelle, ab der die Dichtleiste 64 parallel zu der Rippe 65 verläuft (siehe Fig. 6), d.h. in den angegebenen Richtungen nimmt die Dicke des Dichtungsabschnitts 80 ab. Entsprechend wird nach oben hin der Kanal 67 wieder frei und ebenso die Rippe 65.

Der Dichtungsabschnitt ist nicht massiv, sondern mit inneren Kammern 84, 86 und flexiblen Aussteifungen 82 versehen. Zur Portalprofilstirnseite hin sind die Kammern durch eine Wand 76 abgeschlossen. Wie aus der obenstehenden Beschreibung bereits hervorgeht, sind die Kammern 84, 86 nicht im Portalprofil fortgeführt.

## Patentansprüche

1. Dichtungsvorrichtung für eine Tür, insbesondere von Nutzfahrzeugen und insbesondere mit Hubverriegelung, wobei eine Stirnseite der Tür einem Türportal gegenüberliegt, **dadurch gekennzeichnet , dass** die Stirnseite der Tür und/oder das Türportal im Bereich der unteren Türstirnseite mit einem Formstück oder Dichtungsabschnitt (20, 80) versehen ist, dessen Außenkontur oder Dicke in Längsrichtung der Stirnseite der Tür variiert derart, dass bei Türschließstellung ein Formschluss zwischen dem an der Türstirnseite angebrachten Dichtungsabschnitt (20) und dem Türportal, der Portaldichtung oder dem am Türportal vorgesehenen Dichtungsabschnitt (80) oder zwischen dem am Türportal oder der Türportaldichtung vorgesehenen Dichtungsabschnitt und der Türstirnseite oder dem an der Türstirnseite vorgesehenen Dichtungsabschnitt gebildet ist.

2. Dichtungsvorrichtung nach Anspruch 1, dadurch **g e - kennzeichnet**, dass der an der Stirnseite der Fahrzeugtür vorgesehene Dichtungsabschnitt (20) eine sich in Stirnseitenlängsrichtung verjüngende oder erweiternde Gestalt, insbesondere Keilform, hat, wobei das Portal oder die Portaldichtung oder der am Türportal vorgesehene Dichtungsabschnitt (80) eine komplementär sich erweiternde oder verjüngende Gestalt, insbesondere Keilform, hat.

3. Dichtungsvorrichtung nach Anspruch 1, dadurch **g e - kennzeichnet**, dass der am Türportal vorgesehene Dichtungsabschnitt (80) eine sich in Stirnseitenlängsrichtung verjüngende oder erweiternde Gestalt, insbesondere Keilform, hat, wobei die Stirnseite der Tür oder der an der Türstirnseite vorgesehene Dichtungsabschnitt (20) eine komplementär sich erweiternde oder verjüngende Gestalt, insbesondere Keilform, hat.

4. Dichtungsvorrichtung nach einem der Ansprüche 1 bis 3, **dadurch gekennzeichnet , dass** die Dicke des zumindest einen Dichtungsabschnitts (20, 80) in Querrichtung der Türstirnseite variiert.

5. Dichtungsvorrichtung nach einem der Ansprüche 1 bis 4, **dadurch gekennzeichnet , dass** das unten am Portal oder der Portaldichtung vorgesehene Formstück oder der Dichtungsabschnitt (80) mit diesem (dieser) verklebt, angespritzt oder anvulkanisiert ist.

6. Dichtungsvorrichtung nach einem der Ansprüche 1 bis 5, **dadurch gekennzeichnet , dass** das Formstück oder der Dichtungsabschnitt (20, 80) eine oder mehrere Kammern aufweist.

7. Dichtungsvorrichtung nach einem der Ansprüche 1 bis 6, **dadurch gekennzeichnet , dass** das Formstück oder der Dichtungsabschnitt ganz oder teilweise massiv ausgeführt ist.

8. Dichtungsvorrichtung nach einem der Ansprüche 1 bis 7, mit einem horizontalen Schwellerdichtungsprofil mit mindestens einer horizontal verlaufenden Abdichtungslippe zu einem Türschweller oder einem anderen unteren dem Bereich der Türstirnseite gegenüberliegenden Karosseriebauteil, **dadurch gekennzeichnet, dass** der an der Stirnkante der Tür vorgesehene Dichtungsabschnitt (20) mit dem Schwellerdichtungsprofil (2) einstückig ausgeführt ist.

9. Dichtungsvorrichtung nach Anspruch 8, **dadurch gekennzeichnet, dass** der Dichtungsabschnitt (20) an dem Schwellerdichtungsprofil angeklebt, angespritzt oder anvulkanisiert ist.

10. Dichtungsvorrichtung nach einem der Ansprüche 1 bis 9, **dadurch gekennzeichnet, dass** der an der Stirnseite der Tür vorgesehene Dichtungsabschnitt (20) mit mindestens einer Dichtlippe (24, 26) versehen ist.

11. Dichtungsvorrichtung nach einem der Ansprüche 1 bis 10, mit einem an der Stirnseite der Tür vorgesehenen Schließkantenprofil, **dadurch gekennzeichnet, dass** der an der Türstirnseite vorgesehene Dichtungsabschnitt (20) mit dem Schließkantenprofil (40) einstückig ist.

12. Dichtungsvorrichtung nach den Ansprüchen 8 und 11, mit mindestens einer Druckwellenkammer im Schließkantenprofil, **dadurch gekennzeichnet , dass** zur Verbindung mit dem zum Druckwellenschalter führenden Druckwellenschlauch von der mindestens einen Druckwellenkammer ein Verbindungskanal (46, 52) durch den Dichtungsabschnitt (20, 22) ausgebildet ist.

13. Dichtungsvorrichtung nach Anspruch 12, dadurch **ge - kennzeichnet**, dass ein Metallrohr als Verbindungskanal im Dichtungsabschnitt eingearbeitet ist.

14. Dichtungsvorrichtung nach Anspruch 13, **dadurch gekennzeichnet, dass** am Dichtungsabschnitt (20) auf der der Türstirnseite zugewandten Seite ein kegelstumpfförmiger Ansatz (48, 54) vorsteht, der eine Befestigung des Dichtungsabschnitts (20) an der Tür ermöglicht.

15. Dichtungsvorrichtung nach Anspruch 13 und/oder 14, **dadurch gekennzeichnet , dass** am Dichtungsabschnitt auf der der Türstirnseite zugewandten Seite ein kegelstumpfförmiger Ansatz vorsteht, durch den sich das Metallrohr erstreckt.

## Claims

1. Sealing device for a door, in particular of commercial vehicles and in particular having lifting locking, wherein a front face of the door lies opposite a door portal, **characterised in that** the front face of the door and/or the door portal is/are provided in the region of the lower door front face with a moulded piece or sealing portion (20, 80), the outer contour or thickness of which varies in the longitudinal direction of the front face of the door such that, when the door is in the closed position, a positive fit is formed between the sealing portion (20) attached to the door front face and the door portal, the portal seal or the sealing portion (80) provided on the door portal or between the sealing portion provided on the door portal or the door portal seal and the door front face or the sealing portion provided on the door front face.

2. Sealing device as claimed in claim 1, **characterised in that** the sealing portion (20) provided on the front face of the vehicle door has a shape, in particular a wedge shape, which tapers or widens in the longitudinal direction of the front face, wherein the portal or the portal seal or the sealing portion (80) provided on the door portal has a shape, in particular a wedge shape, which widens or tapers in a complementary manner.

3. Sealing device as claimed in claim 1, **characterised in that** the sealing portion (80) provided on the door portal has a shape, in particular a wedge shape, which tapers or widens in the longitudinal direction of the front face, wherein the front face of the door or the sealing portion (20) provided on the door front face has a shape, in particular a wedge shape, which widens or tapers in a complementary manner.

4. Sealing device as claimed in any one of claims 1 to 3, **characterised in that** the thickness of the at least one sealing portion (20, 80) varies in the transverse direction of the door front face.

5. Sealing device as claimed in any one of claims 1 to 4, **characterised in that** the moulded piece provided at the bottom on the portal or the portal seal, or the sealing portion (80) is adhered, injection-moulded or vulcanised thereto.

6. Sealing device as claimed in any one of claims 1 to 5, **characterised in that** the moulded piece or the sealing portion (20, 80) comprises one or a plurality of chambers.

7. Sealing device as claimed in any one of claims 1 to 6, **characterised in that** the moulded piece or the sealing portion is completely or partially solid in design.

8. Sealing device as claimed in any one of claims 1 to 7, comprising a horizontal sill sealing profile having at least one horizontally extending sealing lip to a door sill or another lower bodywork part opposite the region of the door front face, **characterised in that** the sealing portion (20) provided on the front edge of the door is designed in one piece with the sill sealing profile (2).

9. Sealing device as claimed in claim 8, **characterised in that** the sealing portion (20) is adhered, injection-moulded or vulcanised to the sill sealing profile.

10. Sealing device as claimed in any one of claims 1 to 9, **characterised in that** the sealing portion (20) provided on the front side of the door is provided with at least one sealing lip (24, 26).

11. Sealing device as claimed in any one of claims 1 to 10, comprising a closing edge profile provided on the front face of the door, **characterised in that** the sealing portion (20) provided on the door front face is in one piece with the closing edge profile (40).

12. Sealing device as claimed in claims 8 and 11, comprising at least one pressure wave chamber in the closing edge profile, **characterised in that**, for connection to the pressure wave hose of the at least one pressure wave chamber, said pressure wave hose leading to the pressure wave switch, a connecting channel (46, 52) is formed through the sealing portion (20, 22).

13. Sealing device as claimed in claim 12, **characterised in that** a metal pipe is incorporated as a connecting channel in the sealing portion.

14. Sealing device as claimed in claim 13, **characterised in that** a frustoconical boss (48, 54) protrudes on the sealing portion (20) on the side facing towards the door front face, said boss allowing the sealing portion (20) to be attached to the door.

15. Sealing device as claimed in claim 13 and/or 14, **characterised in that** a frustoconical boss protrudes on the sealing portion on the side facing towards the door front face, the metal pipe extending through said boss.

## Revendications

1. Dispositif d'étanchéification pour une porte, en particulier de véhicules utilitaires et en particulier avec blocage du levage, une partie frontale de la porte étant située à l'opposé d'un cadre de porte, **caractérisé en ce que** la partie frontale de la porte et/ou le cadre de porte, dans la zone de la partie frontale inférieure de la porte, est pourvue d'une pièce moulée ou d'une section d'étanchéité (20, 80), dont le contour externe ou l'épaisseur varie dans la direction longitudinale de la partie frontale de la porte, de telle sorte que lorsque la porte est en position fermée, une complémentarité de forme est mise en oeuvre entre la section d'étanchéité (20) mise en place au niveau de la partie frontale de la porte et le cadre de porte, l'étanchéité du cadre ou la section d'étanchéité (80) prévue au niveau du cadre de porte, ou est mise en oeuvre entre la section d'étanchéité prévue au niveau du cadre de porte ou au niveau de l'étanchéité du cadre de porte et la partie frontale de la porte, ou entre la section d'étanchéité prévue au niveau de la partie frontale de la porte.

2. Dispositif d'étanchéification selon la revendication 1, **caractérisé en ce que** la section d'étanchéité (20) prévue au niveau de la partie frontale de la porte de véhicule présente une forme s'élargissant ou se rétrécissant dans la direction longitudinale de la partie frontale, en particulier en forme de coin, le cadre ou l'étanchéité du cadre ou la section d'étanchéité (80) prévue au niveau du cadre de porte présentant une forme complémentaire s'élargissant ou se rétrécissant, en particulier en forme de coin.

3. Dispositif d'étanchéification selon la revendication 1, **caractérisé en ce que** la section d'étanchéité (80) prévue au niveau du cadre de porte présente une forme s'élargissant ou se rétrécissant dans la direction longitudinale de la partie frontale, en particulier en forme de coin, la partie frontale de la porte ou de la section d'étanchéité (20) prévue au niveau de la partie frontale de la porte présentant une forme complémentaire s'élargissant ou se rétrécissant, en particulier en forme de coin.

4. Dispositif d'étanchéification selon l'une des revendications 1 à 3, **caractérisé en ce que** l'épaisseur d'au moins l'une des sections d'étanchéité (20, 80) varie dans la direction transversale de la partie frontale de la porte.

5. Dispositif d'étanchéification selon l'une des revendications 1 à 4, **caractérisé en ce que** la pièce moulée, prévue au-dessous au niveau du cadre ou de l'étanchéité du cadre, ou la section d'étanchéité (80) est collée, injectée ou vulcanisée avec ledit cadre (ou avec ladite l'étanchéité du cadre).

6. Dispositif d'étanchéification selon l'une des revendications 1 à 5, **caractérisé en ce que** la pièce moulée ou la section d'étanchéité (20, 80) présente une ou plusieurs chambres.

7. Dispositif d'étanchéification selon l'une des revendications 1 à 6, **caractérisé en ce que** la structure de la pièce moulée ou de la section d'étanchéité est massive en partie ou en intégralité.

8. Dispositif d'étanchéification selon l'une des revendications 1 à 7, comprenant un profilé d'étanchéité horizontal de bas de caisse avec au moins une lèvre d'étanchéité se prolongeant à l'horizontale et étant mise en oeuvre jusqu'à un seuil de portière ou jusqu'à un autre élément inférieur de carrosserie se trouvant à l'opposé de la zone de la partie frontale de la porte, **caractérisé en ce que** la section d'étanchéité (20) prévue au niveau de l'arête frontale de la porte est réalisée d'une seule pièce avec le profilé d'étanchéité du bas de caisse (2).

9. Dispositif d'étanchéification selon la revendication 8, **caractérisé en ce que** la section d'étanchéité (20) est encollée, injectée ou vulcanisée au niveau du profilé d'étanchéité du bas de caisse.

10. Dispositif d'étanchéification selon l'une des revendications 1 à 9, **caractérisé en ce que** la section d'étanchéité (20) prévue au niveau de la partie frontale de la porte est pourvue d'au moins une lèvre d'étanchéité (24, 26).

11. Dispositif d'étanchéification selon l'une des revendications 1 à 10, comprenant un profilé de l'arête de fermeture prévu au niveau de la partie frontale de la porte, **caractérisé en ce que** la section d'étanchéité (20) prévue au niveau de la partie frontale de la porte est réalisée d'une seule pièce avec le profilé de l'arête de fermeture (40).

12. Dispositif d'étanchéification selon les revendications 8 et 11, comprenant au moins une chambre à ondes de pression dans le profilé de l'arête de fermeture, **caractérisé en ce qu'**un canal de jonction (46, 52) est formé par la section d'étanchéité (20, 22) en vue de la jonction avec le flexible pour ondes de pression de l'une au moins des chambres à ondes de pression, lequel flexible pour ondes de pression conduisant au commutateur actionné par onde de pression.

13. Dispositif d'étanchéification selon la revendication 12, **caractérisé en ce qu'**un tube en métal est intégré comme canal de jonction dans la section d'étanchéité.

14. Dispositif d'étanchéification selon la revendication 13, **caractérisé en ce qu'**un collet (48, 54) tronconique fait saillie au niveau de la section d'étanchéité (20), sur la face tournée vers la partie frontale de la porte, lequel collet permet une fixation de la section d'étanchéité (20) à la porte.

15. Dispositif d'étanchéification selon la revendication 13 et/ou 14, **caractérisé en ce qu'**un collet tronconique fait saillie au niveau de la section d'étanchéité, sur la face tournée vers la partie frontale de la porte, à travers lequel s'étend le tube en métal.
